Europäisches Patentamt

European Patent Office

Office européen des brevets

(11) Numéro de publication: **0 317 381**
A1

## DEMANDE DE BREVET EUROPEEN

(21) Numéro de dépôt: 88402679.0

(22) Date de dépôt: 24.10.88

(51) Int. Cl.4: **B 60 N 1/02**
F 16 H 25/20

(30) Priorité: 20.11.87 FR 8716122

(43) Date de publication de la demande:
24.05.89 Bulletin 89/21

(84) Etats contractants désignés: DE ES GB IT SE

(71) Demandeur: **ROCKWELL-CIM**
**Tour Gan - Cédex 13**
**F-92082 Paris La Défense 2 (FR)**

(72) Inventeur: **Dauvergne,Jean**
**6 rue M. Hilsz**
**F-95470 Fosses (FR)**

**Chevance,Claude**
**12 bis rue Bergonié**
**F-91600 Savigny-sur-Orge (FR)**

**Laurent,Bruno**
**68 rue Dulong**
**F-75017 Paris (FR)**

(74) Mandataire: **Martin, Jean-Paul et al**
**c/0 CABINET LAVOIX 2, Place d'Estienne d'Orves**
**F-75441 Paris Cedex 09 (FR)**

(54) Vérin télescopique à vis pour le réglage d'un élément tel que siège de véhicule.

(57) Ce vérin comprend une vis tubulaire primaire (10) pourvue d'un filetage extérieur et d'un filetage intérieur de pas inverses, une vis secondaire (11) coopérant avec le filetage intérieur et dont une extrémité (11a) est articulée sur un point fixe, un écrou (9) fixe en rotation, solidaire en translation de l'élément à régler et coopérant avec le filetage extérieur, un réducteur (13) associé à un moteur (M) d'entraînement de la vis primaire (10) en rotation, et des moyens pour empêcher une rotation du réducteur (13) par rapport à l'écrou (9); ces moyens comportent un compas (18) à deux branches (18a, 18b) articulées l'une sur l'autre, et l'une des branches est de plus articulée sur le réducteur (13) tandis que la seconde branche est articulée sur une partie (9) fixe en rotation du vérin. Le compas (18) réduit considérablement les frottements et améliore le rendement du vérin.

FIG.1

EP 0 317 381 A1

## Description

**Vérin télescopique à vis pour le réglage d'un élément tel que siège de véhicule.**

La présente invention a pour objet un vérin télescopique à vis pour le réglage d'un élément tel qu'un siège de véhicule automobile.

On connait, notamment par le brevet français 79 01 741 (n° de publication 2 447 494) un vérin de ce type, comprenant une vis tubulaire primaire pourvue d'un filetage extérieur et d'un filetage intérieur de pas inverses, d'une vis secondaire coopérant avec le filetage intérieur et dont une extrémité est articulée sur un point fixe, un écrou fixe en rotation, solidaire en translation de l'élément à régler et coopérant avec le filetage extérieur, un réducteur associé à des moyens d'entraînement de la vis primaire en rotation, et des moyens pour empêcher une rotation du dispositif moto-réducteur par rapport à l'axe général du vérin, c'est-à-dire l'axe commun des deux vis et de l'écrou.

Le vérin télescopique visé par l'invention peut également être du type de celui décrit dans la demande de brevet français n° 87 13 917 du 8 Octobre 1987 au nom de la Demanderesse.

Les moyens anti-dévers équipant le vérin du brevet français précité peuvent être remplacés par une tringle fixée au carter du réducteur et engagée d'autre part dans l'écrou fixe en rotation.

Cependant ces solutions connues présentent l'inconvénient commun de générer des frottements importants qui dégradent le rendement du vérin télescopique, leur travail étant non négligeable.

L'invention a donc pour but de réaliser un vérin du type ci-dessus dans lequel les moyens anti-dévers sont agencés de façon à ne créer qu'un minimum de frottements, afin d'assurer au vérin un rendement notablement supérieur à celui des vérins antérieurs connus.

Suivant l'invention, les moyens pour empêcher une rotation du réducteur par rapport à l'écrou comportent un compas comprenant deux branches articulées l'une sur l'autre, et l'une des branches est de plus articulée sur le réducteur tandis que la seconde branche est articulée sur une partie fixe en rotation du vérin.

Le couple tendant à faire tourner le réducteur autour de l'axe de la vis primaire est donc transmis à la partie fixe en rotation, de préférence l'écrou, par l'intermédiaire des axes d'articulation des branches du compas sur le réducteur et sur la partie fixe en rotation ainsi que de l'axe d'articulation des branches entre elles, ce qui réduit considérablement les frottements.

Suivant un mode de réalisation de l'invention, les deux branches du compas sont articulées l'une sur l'autre autour d'un axe orthogonal à l'axe général de la vis primaire de l'écrou et de la vis secondaire, et décalé transversalement par rapport à cet axe.

D'autres particularités et avantages de l'invention apparaitront au cours de la description qu va suivre, faite en référence aux dessins annexés qui en illustrent quatre modes de réalisation à titre d'exemples non limitatifs :

- la Fig. 1 est une vue en perspective d'un mode de réalisation du vérin télescopique à vis équipé d'un dispositif anti-dévers selon l'invention;

- la Fig. 2 est une vue coupe longitudinale et élévation partielle du vérin de la Fig 1;

- la Fig. 3 est une vue en élévation longitudinale du vérin dans un plan perpendiculaire à celui de la Fig. 2;

- les Fig. 4 à 6 sont des vues en perspective de trois autres modes de réalisation du vérin selon l'invention.

Le vérin représenté aux dessins est un vérin du type télescopique à vis destiné au réglage en translation d'un élément tel que par exemple un siège de véhicule, dont on veut régler la position longitudinale ou la hauteur au dessus du plancher.

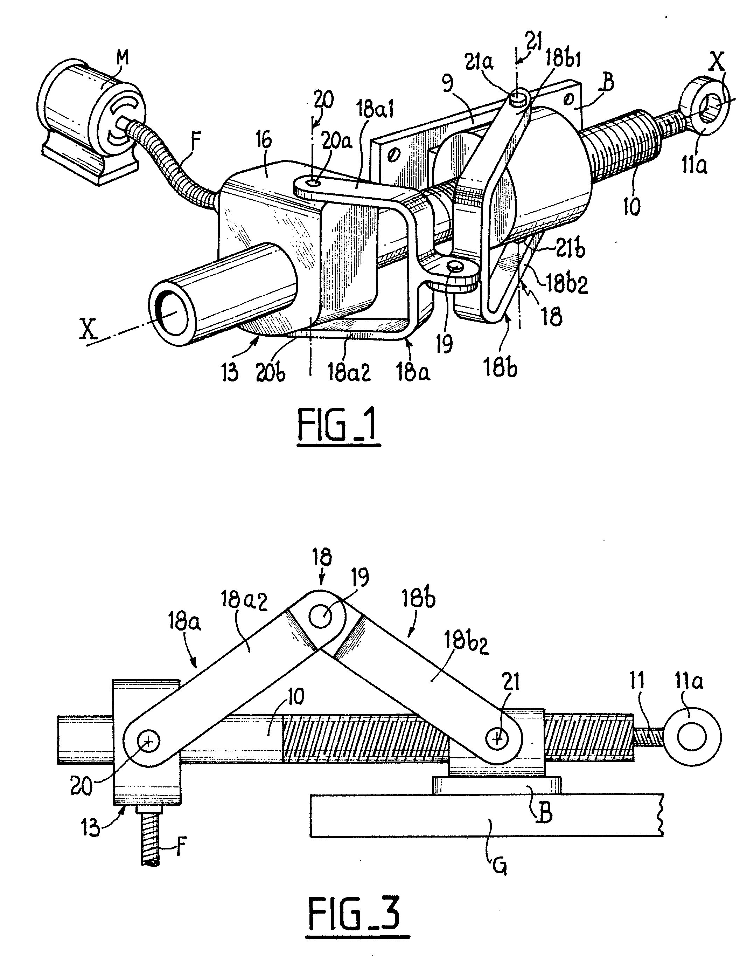

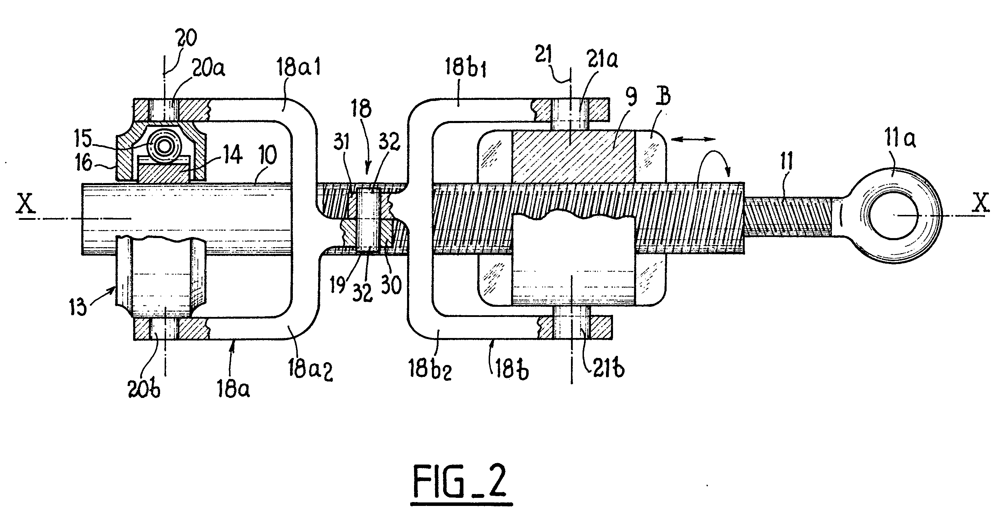

Ce vérin (Figures 1 à 3) comprend une vis tubulaire primaire 10 pourvue d'un filetage extérieur et d'un filetage intérieur de pas inverses, une vis secondaire 11 coopérant avec le filetage intérieur de la vis primaire 10 et dont une extrémité 11a est articulée sur un point fixe tel qu'une bride solidaire du plancher d'un véhicule non représenté, un écrou 9 fixe en rotation, solidaire en translation de l'élément (non représenté) à régler et coopérant avec le filetage extérieur de la vis primaire 10, un réducteur 13 associé à un moteur électrique (M) d'entrainement de la vis primaire 10 en rotation et en translation suivant son axe X-X, et des moyens anti-dévers dont la fonction est d'empêcher une rotation du réducteur 13 par rapport à l'écrou 9.

Le réducteur d'entraînement 13 comporte une roue 14 traversée par une extrémité lisse de la vis 10 et solidaire de celle-ci, et une vis 15 tangente à la roue 14, ces deux pièces étant montées dans un carter 16. La vis 15 est entraînée par le moteur M de façon connue en soi, par exemple par un flexible tournant F.

L'écrou 9 est logé dans un boîtier B fixé à une glissière G solidaire en translation de l'élément à régler. La glissière G peut par exemple coulisser sur une glissière fixée au plancher d'un véhicule et supporter un siège (non représenté) à régler.

Ce vérin peut avantageusement être similaire à celui décrit dans la demande de brevet français précitée de la demanderesse, et ne sera donc pas décrit davantage en détail.

Les moyens pour empêcher une rotation du réducteur 13 par rapport à l'écrou 9, c'est-à-dire un dévers autour de l'axe X-X des vis 10, 11 et de l'écrou 9 sous l'effet du couple applique en fonctionnement au réducteur 13, comportent un compas 18 formé par deux branches ou chapes 18a, 18b, articulées l'une sur l'autre autour d'un axe 19. La branche 18a est de plus articulée sur le réducteur 13, tandis que la seconde branche 18b est articulée sur une partie fixe en rotation du vérin, à savoir l'écrou 9 dans l'exemple décrit. Chaque branche 18a, 18b a une forme générale en Y ou en U dont la base est prolongée par une extrémité centrale saillante 30, 31 percée d'une ouverture 32, respective, ces deux ouvertures étant traversées par l'axe d'articulation 19. Ce dernier est orthogonal l'axe général X-X du vérin est de plus décalé transversalement par rapport à cet axe. Enfin, chaque branche 18a, 18b est constituée de deux bras 18a1, 18a2, 18b1 et 18b2 formant une chape, et dont les extrémités percées de trous sont articulées sur des axes distincts placés de part et d'autre de la vis primaire 10 pour laisser le passage à celle-ci.

Ainsi les bras 18a1, 18a2, sont articulés chacun autour d'axes 20a, 20b fixés au carter 16, tandis que les bras 18b1, 18b2 sont articulés autour d'axes respectifs 21a, 21b fixés à l'écrou 9. Aux axes 20a, 20b et 21a, 21b correspondent des axes géométriques respectifs 20, 21.

Le fonctionnement du vérin télescopique qui vient d'être décrit est le suivant.

Le moteur fixe M entraîne par l'intermédiaire de son flexible F la vis 15, la roue 14 et la vis primaire 10 en rotation autour de son axe X-X. La vis 11 étant fixe et les pas des filetages intérieur et extérieur de la vis 10 étant inverses, l'écrou 9, son boîtier B la glissière G et l'élément à régler se déplacent en translation suivant X-X de la somme des deux pas de vis des filetages de la vis 10 pour chaque tour de celle-ci. Dans le même temps le réducteur 13 se déplace avec la vis 10 en fonction du seul pas de vis de celle-ci par rapport à la vis fixe 11. Il y a donc un déplacement relatif du réducteur 13 par rapport à l'écou 9, et par conséquent un pivotement du compas 18 d'une part autour des axes 20a, 20b, et 21a, 21b et d'autre part autour de l'axe 19.

Le fait que l'axe 19 soit orthogonal mais non concourant avec l'axe X-X de la vis 10 permet ce déplacement relatif axial du réducteur 13. Le couple de réaction est transmis à la partie fixe en rotation 9 via l'axe géométrique 20, la branche 18a, l'axe 19, la branche 18b et l'axe géométrique 21.

Cette transmission du couple de réaction par l'intermédiaire des deux branches d'un compas réduit considérablement les frottements par rapport aux solutions antérieures connues. En effet, les frottements de glissement des solutions connues sont remplacées ici par des frottements de pivotement, dont le travail est beaucoup plus faible.

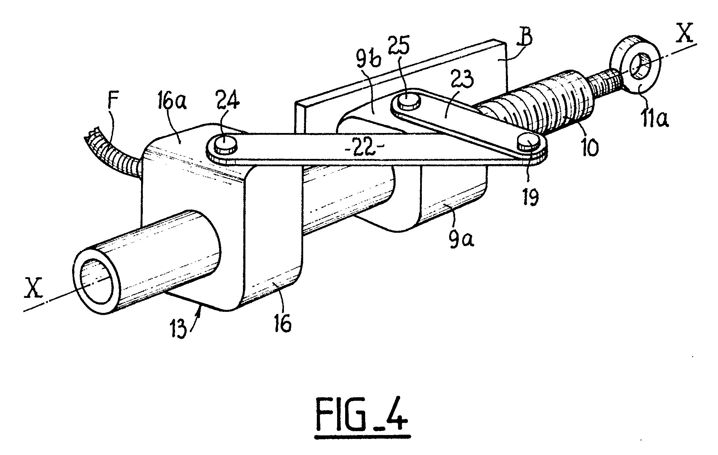

Dans le second mode de réalisation (Figure 4) du vérin, les chapes (18a, 18b) formant le compas des Figures 1 à 3 sont remplacées par deux branches constituées par des bielles 22 et 23, articulées autour de l'axe commun 19 et dont les extrémités sont articulées respectivement sur des axes 24 et 25 portés par le réducteur 13 et l'écrou 9a.

Les deux bielles 22, 23 sont situées dans un plan général parallèle à l'axe X-X et leurs extrémités opposées à l'axe 19 sont guidées par des méplats 16a et 9b, respectivement du carter 16 et de l'écrou 9a, formant surfaces d'appui pour le compas ainsi réalisé.

Les bielles 22, 23 sont de section suffisante et les axes 24, 25 sont de longueur suffisante pour résister aux efforts développés.

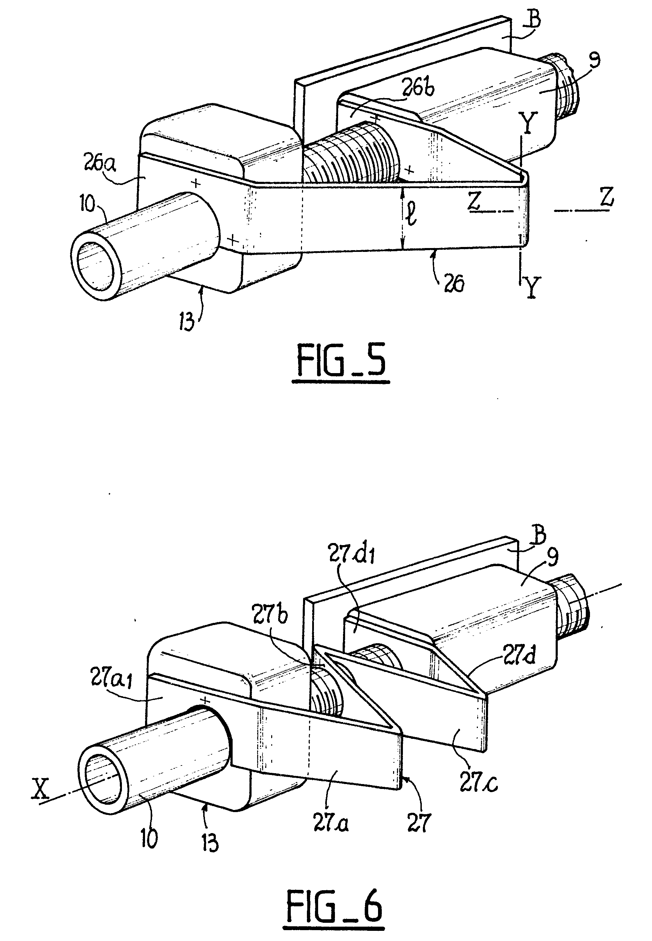

Dans le troisième mode de réalisation de l'invention (Fig. 5), les moyens pour empêcher le réducteur 13 de tourner par rapport à l'écrou 9 comprennent une lame de ressort 26 pliée en V, et donc constituée de deux bras dont les extrémités 26a, 26b sont fixées respectivement au réducteur 13 et à une partie fixe en rotation du verin, à savoir à l'écrou 9. La largeur 1 de cette lame 26 est très supérieure à son épaisseur, de sorte que son inertie de flexion autour d'un axe YY parallèle à ladite lame 26, c'est-à-dire dans le sens de son pliage, soit très faible.

Au contraire, son inertie de flexion autour d'un axe ZZ perpendiculaire à YY est très forte, c'est-à-dire dans le sens qui s'oppose à la rotation du réducteur 13 par rapport à l'écrou 9.

Enfin, dans la variante de la Fig. 6, la lame ressort 27 comporte plusieurs bras pliés en accordéon, au nombre de quatre 27a, 27b, 27c, 27d, les extrémités 27a1 et 27d1 de la lame 27 étant fixées respectivement au réducteur 13 et à l'écrou 9. Bien entendu, le nombre de plis de la lame 27 peut varier, celle-ci présentant par ailleurs des caractéristiques de flexion similaires à celles de la lame de la Fig.5.

## Revendications

1. Vérin télescopique à vis pour le réglage d'un élément tel que siège de véhicule, comprenant une vis tubulaire primaire (10) pourvue d'un filetage extérieur et d'un filetage intérieur de pas inverses, une vis secondaire (11) coopérant avec le filetage intérieur et dont une extrémité (11a) est articulée sur un point fixe, un écrou (9) fixe en rotation solidaire en translation de l'élément à régler et coopérant avec le filetage extérieur, un réducteur (13) associé à un moteur (M) d'entraînement de la vis primaire (10) en rotation, et des moyens pour empêcher une rotation du réducteur (13) par rapport à l'écrou (9), caractérisé en ce que lesdits moyens comportent un compas (18) comprenant deux branches (18a, 18b) articulées l'une sur l'autre, et l'une des branches est de plus articulée sur le réducteur (13) tandis que la seconde branche est articulée sur une partie (9) fixe en rotation du vérin.

2. Vérin selon la revendication 1, caractérisé en ce que les deux branches (18a, 18b) du compas (18) sont articulées l'une sur l'autre autour d'un axe (19) orthogonal à un axe général (X-X) de la vis primaire (10) de l'écrou (9) et de la vis secondaire (11) et décalé transversalement par rapport à cet axe (X-X).

3. Vérin selon la revendicatin 2, caractérisé en ce que l'une (18b) des branches du compas (18) est articulée sur l'écrou (9) fixe en rotation.

4. Vérin selon l'une des revendications 1 à 3, caractérisé en ce que chaque branche du compas a la forme générale d'un Y ou d'un U, deux bras (18a1, 18a2, 18b1, 18b2) de chaque branche (18a, 18b) étant articulés respectivement autour de deux axes (20a, 20b; 21a, 21b) distincts placés de part et d'autre de la vis primaire (10).

5. Vérin selon l'une des revendications 1 à 3, caractérisé en ce que chaque branche du compas est formée par une bielle (22, 23), et les extrémités de ces bielles sont guidées par des méplats d'appui (16a, 9b) ménagés sur le réducteur (13) et sur la partie fixe en rotation, par exemple l'écrou (9a).

6. Vérin télescopique à vis pour le réglage d'un élément tel que siège de véhicule, comprenant une vis tubulaire primaire (10) pourvue d'un filetage extérieur et d'un filetage intérieur de pas inverses, une vis secondaire (11) coopérant avec le filetage intérieur et dont une extrémité (11a) est articulée sur un point fxe, un écrou (9) fixe en rotation solidaire en translation de l'élément à régler et coopérant avec le filetage extérieur, un réducteur (13) associé à un moteur (M) d'entraînement de la vis primaire (10) en rotation, et des moyens pour empêcher une rotation du réducteur (13) par rapport à l'écrou (9), caractérisé en ce que lesdits moyens comprennent une lame de ressort (26, 27) pliée dont les extrémités (26a, 26b; 27a1, 27b1) sont fixées respectivement au réducteur (13) et à une partie (9) fixe en rotation du vérin, et la largeur (1) de cette lame est très supérieure à son épaisseur, de telle sorte que son inertie de flexion autour d'un axe (YY) parallèle à ladite lame, c'est-à-dire dans le sens de son pliage, soit très faible, alors que son inertie de flexion autour d'un axe (ZZ) perpendiculaire au précédent (YY) est très forte.

7. Vérin selon la revendication 6, caractérisé en ce que la lame (26, 27) comporte deux bras en V, ou plusieurs plis (27a...27d) en accordéon.

FIG_1

FIG_3

FIG_2

FIG_4

FIG_5

FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-1 873 918  (KLAUS ESSER)<br>* figure 1; page 4, ligne 7 - page 5, ligne 2 *<br>--- | 1,6 | B 60 N    1/02<br>F 16 H   25/20 |
| A | DE-B-1 550 719  (COMM. A L ENERGIE ATOMIQUE)<br>* figures 1-3; colonne 1, ligne 47 - colonne 2, ligne 20 *<br>--- | 1,6 | |
| A | GB-A-2 042 061  (CIM)<br>* abrégé; figure 1 *<br>----- | 1,6 | |

DOMAINES TECHNIQUES
RECHERCHES (Int. Cl.4)

B 60 N    1/00
F 16 H   25/00

Le présent rapport a été établi pour toutes les revendications

| Lieu de la recherche | Date d'achèvement de la recherche | Examinateur |
|---|---|---|
| BERLIN | 06-02-1989 | GERTIG I. |

EPO FORM 1503 03.82 (P0402)